# EUROPÄISCHE PATENTSCHRIFT

(11) **EP 1 544 492 B1**
(45) Veröffentlichungstag und Bekanntmachung des Hinweises auf die Patenterteilung: **18.07.2007**
(21) Anmeldenummer: 04029748.3
(22) Anmeldetag: 16.12.2004
(51) Int. Cl.: F16D 48/04, F16H 61/30

(54) **Hydraulischer Funktionsblock**
Hydraulic function block
Bloc fonctionnel hydraulique

(30) Priorität: 19.12.2003 DE 10360611
(43) Veröffentlichungstag der Anmeldung: 22.06.2005
(73) Patentinhaber: FTE automotive GmbH, 96106 Ebern (DE); GETRAG InnovationsCenter, 74199 Untergruppenbach (DE)
(72) Erfinder: Reul, Alexander, Dipl.-Ing. (FH), 96158 Frensdorf-Reundorf (DE); Heubner, Wilhelm, Dipl.-Ing. (FH), 96274 Itzgrund, Kaltenbrunn (DE); Stössel, Roland, Dipl.-Ing. (FH), 97514 Oberaurach (DE); Kaiser, Jochen, Dipl.-Ing. (FH), 95326 Kulmbach (DE); Petrzik, Gunther, Dipl.-Ing., 78112 St. Georgen (DE); Seufert, Martin, Dipl.-Ing., 71711 Steinheim (DE); Rühle, Günter, Dipl.-Ing., 74369 Löchgau (DE); Schäfer, Andreas, Dipl.-Ing., 74232 Abstatt (DE); Harst, Richard, Dipl.-Ing., 74078 Heilbronn (DE)
(74) Vertreter: Oppermann, Mark

(56) Entgegenhaltungen:
- DE-A1- 4 309 901
- DE-A1- 19 944 653
- DE-U1- 20 015 782
- FINDEISEN: "Ölhydraulik" 1994, SPRINGER-VERLAG , BERLIN , XP002318388 * Seite 658 - Seite 663 *

## Beschreibung

Die vorliegende Erfindung bezieht sich auf einen hydraulischen Funktionsblock nach dem Oberbegriff des Patentanspruchs 1. Insbesondere bezieht sich die Erfindung auf einen hydraulischen Funktionsblock für eine Vorrichtung zur automatisierten Betätigung einer Reibkupplung und eines mechanischen Schaltgetriebes in einem Kraftfahrzeug, wie sie in der Automobilindustrie neuerdings vermehrt zum Einsatz kommen.

Auch in Europa zeichnet sich ein Trend zu einer höheren Automatisierung von Kraftfahrzeugen ab. Dies ist zum einen darauf zurückzuführen, daß bei herkömmlich ausgerüsteten Kraftfahrzeugen die bedingt durch eine steigende Verkehrsdichte in der Frequenz zunehmenden Schaltvorgänge, bei denen jeweils die Reibkupplung über das Kupplungspedal zu betätigen und das Schaltgetriebe über den Schalthebel zu schalten ist, mehr und mehr als lästige Arbeit empfunden werden. Zum anderen muß im Hinblick auf die Forderung geringen Verbrauchs sowie die zunehmend strengeren Abgas- und Geräuschvorschriften die Verbrennungskraftmaschine gezielt in günstigen Betriebspunkten betrieben werden, um beispielsweise auch in der Warmlaufphase die vorgeschriebenen Werte einzuhalten, wozu eine Automatisierung der Schalt- und Kupplungsvorgänge unentbehrlich ist. Hydraulische Stellvorrichtungen bzw. -antriebe zum Aus- bzw. Einrücken von Trockenreibkupplungen (z.B. DE 42 37 853 A1, EP 0 984 185 A2) sowie hydraulische Mehrstellungszylindersysteme zur Gang- und Gassenwahl an mechanischen Schaltgetrieben (z.B. DE 40 38 170 A1, DE 197 02 656 A1, DE 200 15 782 U1) stellen Komponenten der hierzu im Stand der Technik vorgeschlagenen Automatisierungskonzepte dar.

In diesem Zusammenhang offenbart die DE 43 09 901 A1 aufbauend auf der Lehre der DE 42 37 853 A1 einen hydraulischen Stellantrieb für eine Kraftfahrzeug-Reibungskupplung, bei dem ein Elektromotor, eine von dem Elektromotor angetriebene Hydraulikpumpe und ein von der Hydraulikpumpe gespeister Hydraulik-Druckspeicher eines Druckversorgungsabschnitts sowie ein über ein steuerbares Proportionalventil mit dem Hydraulik-Druckspeicher verbundener Stellzylinder eines hydraulischen Funktionsabschnitts zur Kupplungsbetätigung mittels eines Trägerblocks zu einem Antriebsmodul zusammengefaßt sind, wobei der Trägerblock Kanäle zur Verbindung des Hydraulik-Druckspeichers mit der Hydraulikpumpe und dem Proportionalventil sowie zur Verbindung des Proportionalventils mit dem Stellzylinder enthält. Darüber hinaus sind gemäß diesem Stand der Technik im Antriebsmodul weitere Steuerventile angeordnet, welche mit dem Hydraulik-Druckspeicher verbunden sind und ein außerhalb des Antriebsmoduls angeordnetes Nehmerzylindersystem (Zylinder Gassenwahl, Gangeinlegezylinder) des hydraulischen Funktionsabschnitts zur Steuerung eines Schaltgetriebes über hydraulische Verbindungen beaufschlagen. Hierdurch soll ein einfach zu montierender hydraulischer Stellantrieb für eine Reibungskupplung geschaffen werden, der darüber hinaus noch zur Steuerung eines Schaltgetriebes herangezogen werden kann.

Dieser Stand der Technik ist jedoch insofern verbesserungsbedürftig, als es hier im druckgeregelten hydraulischen Funktionsabschnitt infolge von druck- und ggf. temperaturbedingten Aufweitungen an den das Antriebsmodul mit dem Nehmerzylindersystem verbindenden Druckleitungen, den zugeordneten elastischen Dichtungen etc. zu Druck- und Wegverlusten im Nehmerzylindersystem kommen kann, die der Stellgenauigkeit des Nehmerzylindersystems abträglich sind.

Ein hydraulischer Funktionsblock gemäß dem Oberbegriff des Patentanspruchs 1 ist schließlich aus der DE 199 44 653 A1 bekannt.

Der Erfindung liegt die Aufgabe zugrunde, einen möglichst kompakt bauenden und einfach herstellbaren hydraulischen Funktionsblock für eine Vorrichtung zur Betätigung einer Reibkupplung und eines mechanischen Schaltgetriebes insbesondere in einem Kraftfahrzeug zu schaffen, durch den unerwünschte Druck- und Wegverluste an den angesteuerten Nehmerzylindern weitestgehend vermieden werden.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 12.

Ein hydraulischer Funktionsblock für eine Vorrichtung zur Betätigung einer Reibkupplung und eines mechanischen Schaltgetriebes insbesondere in einem Kraftfahrzeug, wobei die Vorrichtung umfaßt: einen Druckversorgungsabschnitt mit einer Leistungseinheit zur Erzeugung eines hydraulischen Drucks, einen an den Druckversorgungsabschnitt über Steuerorgane angeschlossenen hydraulischen Funktionsabschnitt mit einer Gebereinheit zur hydraulischen Ansteuerung eines mit der Reibkupplung wirkverbindbaren Stellzylinders, mittels dessen die Reibkupplung wahlweise aus- bzw. einrückbar ist, und einem mit dem Schaltgetriebe wirkverbindbaren Mehrstellungszylindersystem, welches zur Gang- bzw. Gassenwahl hydraulisch ansteuerbar ist, sowie einen Druckentlastungsabschnitt mit einem Vorratsbehälter für die Hydraulikflüssigkeit, wobei zumindest die Steuerorgane, die Gebereinheit und das Mehrstellungszylindersystem der Vorrichtung an bzw. in dem Funktionsblock integriert sind; hat erfindungsgemäß eine Aufbaufläche, an der die Steuerorgane und die Gebereinheit anflanschbar sind, und eine Flanschfläche, mittels der er an einem Getriebegehäuse anflanschbar ist, wobei der Druckversorgungsabschnitt einen im Funktionsblock ausgebildeten, gemeinsamen Druckkanal für die Steuerorgane aufweist, der Druckentlastungsabschnitt einen im Funktionsblock ausgebildeten, gemeinsamen Tankkanal für die Steuerorgane aufweist, das Mehrstellungszylindersystem einen Wählzylinder zur Gassenwahl sowie einen Schaltzylinder zur Gangwahl hat, die jeweils einen Kolben aufweisen, der in einer jeweils zugeordneten, in dem Funktionsblock ausgebildeten Zylinderbohrung verschiebbar aufgenommen ist, und die Aufbaufläche, die Flanschfläche, der Druckkanal, der Tankkanal und die Zylinderbohrungen in Längsrichtung des Funktionsblocks verlaufen.

Demgemäß sind die Bauelemente bzw. -gruppen des hydraulischen Funktionsabschnitts, der sich dadurch auszeichnet, daß dort Druck und Volumen der über den Druckversorgungsabschnitt zugeführten Hydraulikflüssigkeit definiert moduliert werden bzw. eingestellt sind, um über die Gebereinheit und das Mehrstellungszylindersystem die gewünschten Stellbewegungen an Reibkupplung bzw. Schaltgetriebe zu erzeugen, weitestgehend an bzw. in dem Funktionsblock zusammengefaßt, so daß im hydraulischen Funktionsabschnitt Hydraulikverbindungen mittels separater Rohr- oder Schlauchleitungen und die damit verbundenen Elastizitäten, die unerwünschte Druck- und Wegverluste ermöglichen, weitestgehend vermieden werden. Die gewünschten Stellbewegungen an Reibkupplung bzw. Schaltgetriebe können somit mit der erforderlichen Stellgenauigkeit durchgeführt werden, ohne daß es hierfür eines hohen regelungstechnischen Aufwands bedarf. Etwaige Druck- und Wegverluste infolge von druck- und ggf. temperaturbedingten Aufweitungen im Druckversorgungsabschnitt sind für die Stellgenauigkeit der Vorrichtung unerheblich, da diese Verluste ggf. vor den Steuerorganen entstehen, d.h. in einem Abschnitt der Vorrichtung, in dem Druck und Volumen der zugeführten Hydraulikflüssigkeit noch nicht definiert moduliert werden bzw. eingestellt sind. Sofern der mit der Reibkupplung wirkverbindbare Stellzylinder infolge der baulichen Gegebenheiten, genauer gesagt einem etwa vorhandenen größeren Abstand zwischen der Wirkangriffsstelle Stellzylinder/Reibkupplung einerseits und der Wirkangriffsstelle Mehrstellungszylindersystem/Schaltgetriebe andererseits nicht auch an bzw. in dem Funktionsblock integriert werden kann, ist im hydraulischen Funktionsabschnitt der Vorrichtung nur eine einzige Druckleitung notwendig, die ggf. aus dem Funktionsblock herausgeführt werden muß, um die Gebereinheit mit dem Stellzylinder zur Kupplungsbetätigung zu verbinden. Diese Druckleitung aber läßt sich mit noch vertretbarem Aufwand hinreichend druck- und temperaturfest ausbilden.

Darüber hinaus hat der erfindungsgemäße Funktionsblock den Vorteil, daß er als separates Modul an das Montageband des Kraftfahrzeugherstellers angeliefert und bei der Bandmontage des Kraftfahrzeugs im Kraftfahrzeug auf einfache Weise montiert, genauer am Getriebegehäuse angeflanscht werden kann, so daß hier eine aufwendige Installation von Einzelkomponenten des hydraulischen Funktionsabschnitts der Betätigungsvorrichtung und deren Verschaltung mit Hydraulikleitungen weitestgehend entfallen. Auch kann der erfindungsgemäße Funktionsblock in vorteilhafter Weise schon außerhalb des Kraftfahrzeugs, d.h. im uneingebauten Zustand einer hydraulischen Funktionsprüfung unterzogen werden. Des weiteren wird durch den erfindungsgemäßen Funktionsblock vorteilhaft Bauraum eingespart, der bei modernen Kraftfahrzeugantrieben ohnehin knapp bemessen ist, und Wartungs- bzw. Reparaturarbeiten werden infolge der zentralen Anordbarkeit und kompakten Ausgestaltung des erfindungsgemäßen Funktionsblocks vereinfacht. Nicht zuletzt kann ein solcher Funktionsblock bei der Zulieferfirma mit Hydraulikflüssigkeit vorbefüllt und somit ggf. im schon an die Leistungseinheit und den Vorratsbehälter angeschlossenen Zustand befüllt an das Montageband des Kraftfahrzeugherstellers angeliefert werden, was dort zum einen den Abschluß der Bandmontage vereinfacht und zum anderen die Gefahr einer inneren Verschmutzung beim Transport und bei der Fahrzeugmontage beseitigt.

In einer vorteilhaften Ausgestaltung des hydraulischen Funktionsblocks sind die Steuerorgane und die Gebereinheit, die an der vorzugsweise ebenen Aufbaufläche. anflanschbar sind in Patronenbauweise ausgeführt. Dies erleichtert insbesondere etwaige Wartungs- oder Reparaturarbeiten. Hierbei können die Steuerorgane und die Gebereinheit im an der Aufbaufläche des Funktionsblocks angeflanschten Zustand ferner in einer Reihe hintereinander angeordnet sein, was Bauraumvorteile mit sich bringt. Wenn weiterhin die Gebereinheit mittig zwischen den Steuerorganen angeordnet ist und das Steuerorgan für die Gebereinheit der Gebereinheit benachbart liegt, können die zugehörigen Verbindungsbohrungen und -kanäle im Funktionsblock besonders kurz gehalten werden. In einer vorteilhaft kompakten Ausgestaltung des Funktionsblocks kann schließlich jedem Steuerorgan eine Anschlußbohrung zur Aufnahme eines jeweils zugehörigen Ventilschiebers zugeordnet sein, die ausgehend von der Aufbaufläche in den Funktionsblock eingebracht ist.

Da der Druckversorgungsabschnitt einen gemeinsamen Druckkanal für die Steuerorgane aufweist, der im Funktionsblock ausgebildet ist, während der Druckentlastungsabschnitt einen gemeinsamen Tankkanal für die Steuerorgane aufweist, der im Funktionsblock ausgebildet ist, ist der Herstellungs- und Montageaufwand insgesamt reduziert.

In einer insbesondere herstellungstechnisch vorteilhaften Ausgestaltung des Funktionsblocks kann hierbei jede Anschlußbohrung mit dem Druckkanal und dem Tankkanal innerhalb des Funktionsblocks in Verbindung stehen, wobei jede Anschlußbohrung vorzugsweise sowohl den Druckkanal als auch den Tankkanal schneidet, so daß hier weitere Verbindungsbohrungen oder -kanäle im Funktionsblock entbehrlich sind.

Wenn die Relativlage von Druckkanal, Tankkanal und Anschlußbohrungen im Funktionsblock derart getroffen ist, daß in der Einbaulage des Funktionsblocks der Tankkanal oberhalb des Druckkanals liegt und die Anschlußbohrungen steigend verlaufen, kann in vorteilhafter Weise eine Selbstentlüftung des hydraulischen Systems erfolgen, ohne daß für die Entlüftung des Systems am Funktionsblock separate Entlüfter oder Druckbegrenzungsventile zum Spülen sowie entsprechende Steuerroutinen vorzusehen wären. Ein derart ausgestalteter Funktionsblock ist somit besonders montage- und wartungsfreundlich.

Die zur Aufnahme der Ventilschieber der Steuerorgane vorgesehenen Anschlußbohrungen können parallel zueinander sowie rechtwinklig bezüglich des Druckkanals und des Tankkanals im Funktionsblock verlaufen, was auch die Bohrungs- bzw. Kanallängen im Funktionsblock in vorteilhafte Weise verkürzt.

Das Mehrstellungszylindersystem hat einen Wählzylinder zur Gassenwahl sowie einen Schaltzylinder zur Gangwahl, die jeweils einen Kolben aufweisen, der in einer jeweils zugeordneten Zylinderbohrung verschiebbar aufgenommen ist, wobei die Zylinderbohrungen zur Integration bzw. Eingliederung des Mehrstellungszylindersystems in dem Funktionsblock ausgebildet sind. Insbesondere in herstellungstechnischer Hinsicht bevorzugt ist es hierbei, wenn die Zylinderbohrungen ausgehend von jeweils einer Stirnfläche des Funktionsblocks in den Funktionsblock eingebracht sind. Liegen die Zylinderbohrungen dabei noch auf einer gemeinsamen Achse, baut der Funktionsblock in vorteilhafter Weise besonders flach. Die Zylinderbohrungen können des weiteren auf einfache Weise über Querbohrungen mit den zur Aufnahme der Ventilschieber der Steuerorgane für das Mehrstellungszylindersystem im Funktionsblock vorgesehenen Anschlußbohrungen verbunden sein.

Die Wirkverbindung zwischen Mehrstellungszylindersystem und Schaltgetriebe erfolgt derart, daß der Funktionsblock eine vorzugsweise ebene Flanschfläche aufweist, mittels der er an einem Getriebegehäuse anflanschbar ist. Hierbei kann der Funktionsblock ausgehend von der Flanschfläche mit Ausnehmungen zur Aufnahme von mechanischen Verbindungsgliedern versehen sein, über die das Mehrstellungszylindersystem mit einer Schaltwelle des Schaltgetriebes wirkverbunden werden kann. Das Anordnen der Wirkverbindung zwischen Mehrstellungszylindersystem und Schaltgetriebe im Bereich der Flanschfläche des Funktionsblocks ist zum einen einer kompakten Ausgestaltung des Funktionsblocks förderlich, zum anderen kann so eine Kapselung der Wirkverbindung gegenüber der Umgebung auf einfache Weise erfolgen.

Der Umstand daß die Aufbaufläche, der Druckkanal, der Tankkanal, die Zylinderbohrungen und die Flanschfläche des Funktionsblocks in Längsrichtung des Funktionsblocks verlaufen, ist im übrigen einer kompakten Bauweise des Funktionsblocks förderlich und ermöglicht eine einfache Bearbeitung des Funktionsblocks.

Insbesondere zur Reduktion der Herstellungskosten und auch zur Gewichtsminimierung bevorzugt ist es hierbei schließlich, wenn der Funktionsblock aus einem Strangpreßprofil aus einem Leichtmetall wie einer Aluminiumlegierung ausgebildet wird.

Im folgenden wird die Erfindung anhand eines bevorzugten Ausführungsbeispiels unter Bezugnahme auf die beigefügten, teilweise schematischen Zeichnungen näher erläutert. Darin zeigen:
- Fig. 1: ein Blockschaltbild einer Vorrichtung zur Betätigung einer Reibkupplung (nicht dargestellt) und eines mechanischen Schaltgetriebes (nicht dargestellt) in einem Kraftfahrzeug - nachfolgend kurz "Betätigungsvorrichtung" genannt - bei der ein erfindungsgemäßer hydraulischer Funktionsblock zum Einsatz kommt,
- Fig. 2: eine perspektivische Darstellung eines erfindungsgemäßen hydraulischen Funktionsblocks von schräg vorne im nicht am Getriebegehäuse angeflanschten Zustand, an dem Steuerorgane für einen hydraulischen Funktionsabschnitt der Betätigungsvorrichtung und eine zur hydraulischen Kupplungsbetätigung vorgesehene Gebereinheit des hydraulischen Funktionsabschnitts in Patronenbauweise angeflanscht sind,
- Fig. 3: eine perspektivische Darstellung des hydraulischen Funktionsblocks gemäß Fig. 2 von schräg hinten mit Blick auf eine Flanschfläche, über die der Funktionsblock am Getriebegehäuse (nicht dargestellt) anflanschbar ist,
- Fig. 4: eine Seitenansicht des hydraulischen Funktionsblocks gemäß Fig. 2,
- Fig. 5: eine Schnittansicht des hydraulischen Funktionsblocks gemäß Fig. 2 entsprechend der Schnittverlaufslinie V-V in Fig. 4, wobei Magnetantriebe der Steuerorgane für den hydraulischen Funktionsabschnitt der Betätigungsvorrichtung zur Vereinfachung der Darstellung nicht geschnitten dargestellt sind,
- Fig. 6: eine Schnittansicht des hydraulischen Funktionsblocks gemäß Fig. 2 entsprechend der Schnittverlaufslinie VI-VI in Fig. 4, welche die Kolben eines mit dem Schaltgetriebe wirkverbindbaren, im Funktionsblock integrierten Mehrstellungszylindersystems in ihrer Ruhestellung zeigt,
- Fig. 7: eine hinsichtlich des Schnittverlaufs der Darstellung gemäß Fig. 6 entsprechende, schematische Schnittansicht des hydraulischen Funktionsblocks gemäß Fig. 2 in einem gegenüber Fig. 6 kleineren Maßstab, die veranschaulicht, wie das im Funktionsblock integrierte Mehrstellungszylindersystem mit einer Schaltwelle des Schaltgetriebes in Wirkverbindung steht, und
- Fig. 8: eine perspektivische Transparenzdarstellung des hydraulischen Funktionsblocks gemäß Fig. 2 ohne angeflanschte Anbauteile, welche in der Art eines Drahtmodells die Anordnung und den Verlauf der Hohlräume in dem hydraulischen Funktionsblock veranschaulicht.

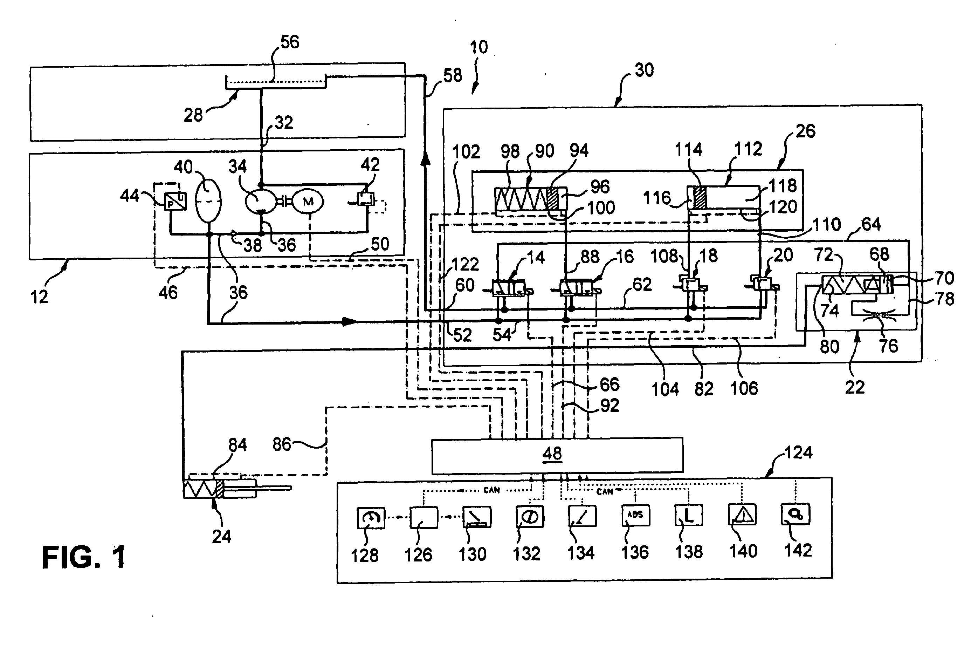

Die Fig. 1 zeigt eine mit 10 bezifferte Vorrichtung zur hydraulischen Betätigung einer Reibkupplung und eines mechanischen Schaltgetriebes in einem Kraftfahrzeug. Die Betätigungsvorrichtung 10 kann grob in drei Hydraulikabschnitte unterteilt werden, nämlich einen Druckversorgungsabschnitt, einen hydraulischen Funktionsabschnitt und einen Druckentlastungsabschnitt, die hydraulisch miteinander verschaltet sind. Der Druckversorgungsabschnitt weist eine nachfolgend noch näher beschriebene Leistungseinheit 12 zur Erzeugung eines hydraulischen Drucks auf. An den Druckversorgungsabschnitt ist der hydraulische Funktionsabschnitt über im dargestellten Ausführungsbeispiel vier Steuerorgane 14, 16, 18, 20 angeschlossen, die ebenfalls noch näher beschrieben werden. Der hydraulische Funktionsabschnitt hat zum einen eine Gebereinheit 22 zur hydraulischen Ansteuerung eines mit der Reibkupplung in an sich bekannter Weise wirkverbindbaren Stellzylinders 24 (herkömmlicher Kupplungsnehmerzylinder oder Zentralausrücker), mittels dessen die Reibkupplung wahlweise aus- bzw. einrückbar ist. Zum anderen weist der hydraulische Funktionsabschnitt ein mit dem Schaltgetriebe wirkverbindbares Mehrstellungszylindersystem 26 auf, welches zur Gang- bzw. Gassenwahl im Schaltgetriebe hydraulisch ansteuerbar ist. Der Druckentlastungsabschnitt schließlich umfaßt einen Vorrats- bzw. Nachlaufbehälter 28 für die Hydraulikflüssigkeit der Betätigungsvorrichtung 10. Wesentlich ist, daß zumindest die Steuerorgane 14, 16, 18, 20, die Gebereinheit 22 und das Mehrstellungszylindersystem 26 der Betätigungsvorrichtung 10 an bzw. in einem Funktionsblock 30 integriert sind, wie im Folgenden noch ausführlich erläutert werden wird.

Die eingangsseitig über eine Ansaugleitung 32 mit dem Vorratsbehälter 28 verbundene Leistungseinheit 12 hat eine Hydraulikpumpe 34, die wahlweise mittels z.B. eines Elektromotors M angetrieben werden kann, um Hydraulikflüssigkeit über die Ansaugleitung 32 aus dem Vorratsbehälter 28 zu fördern. Der Ausgang der Hydraulikpumpe 34 ist mittels einer Druckleitung 36 über ein Rückschlagventil 38 an einen Druckspeicher 40 angeschlossen. In Parallelschaltung zur Hydraulikpumpe 34 ist ein Druckbegrenzungsventil 42 vorgesehen, welches verhindert, daß der stromabwärts der Hydraulikpumpe 34 herrschende hydraulische Druck einen vorbestimmten Wert überschreitet, indem es bei Erreichen des vorbestimmten Druckwertes die Druckleitung 36 temporär mit der Ansaugleitung 32 verbindet. Zur Sensierung des von der Leistungseinheit 12 zur Verfügung gestellten hydraulischen Drucks ist ferner ein Druckwächter 44 an die Druckleitung 36 angeschlossen. Der Druckwächter 44 ist über eine elektrische Signalleitung 46 mit einer Steuerelektronik 48 verbunden, die u.a. dazu dient, den Elektromotor M über eine elektrische Steuerleitung 50 anzusteuern. Im Ergebnis kann die Leistungseinheit 12 mittels der Steuerelektronik 48 derart angesteuert werden, daß die Leistungseinheit 12 über die Druckleitung 36 eine variable Flüssigkeitsströmung mit jeweils definiertem Volumenstrom und definiertem Druck abzugeben vermag.

Die Leistungseinheit 12 ist über die Druckleitung 36 an den Funktionsblock 30, genauer über einen Druckanschluß 52 des Funktionsblocks 30 an einen im Funktionsblock 30 ausgebildeten Druckkanal 54 angeschlossen. Der das Ende des Druckversorgungsabschnitts bildende Druckkanal 54 dient der gemeinsamen Versorgung der Steuerorgane 14, 16, 18 und 20 mit Hydraulikflüssigkeit. Gleichermaßen ist der einen Filter 56 aufweisende Vorratsbehälter 28 über eine Tankleitung 58 und einen Tankanschluß 60 des Funktionsblocks 30 an einen Tankkanal 62 angeschlossen, der ebenfalls im Funktionsblock 30 ausgebildet ist.

Der den Anfang des Druckentlastungsabschnitts bildende Tankkanal 62 dient der gemeinsamen Druckentlastung der Steuerorgane 14, 16, 18 und 20 zum Vorratsbehälter 28 hin.

Bei dem in Fig. 1 dargestellten Steuerorgan 14, das über einen Geberkanal 64 im Funktionsblock 30 hydraulisch mit der Gebereinheit 22 zur hydraulischen Kupplungsbetätigung verbunden ist, handelt es sich um ein Proportionalventil in 3/2-Wege-Ausführung. Es ist mittels einer Feder in die in Fig. 1 gezeigte Grundstellung vorgespannt, in der es den Geberkanal 64 mit dem Tankkanal 62 verbindet, und kann elektromagnetisch betätigt werden, um zur Versorgung der Gebereinheit 22 mit Hydraulikflüssigkeit den Druckkanal 54 mit dem Geberkanal 64 zu verbinden, wofür es über eine elektrische Steuerleitung 66 an die Steuerelektronik 48 angeschlossen ist.

Bei der Gebereinheit 22 selbst handelt es sich im Prinzip um eine hydraulische Stellvorrichtung, wie sie aus der EP 0 984 185 A2 bekannt ist, auf die hiermit hinsichtlich Aufbau und Funktion der Stellvorrichtung ausdrücklich Bezug genommen wird. Kurz gefaßt besitzt die Gebereinheit 22 einen Geberkolben 68, der auf seiner in Fig. 1 rechten Seite einen mit dem Geberkanal 64 kommunizierenden Geberdruckraum 70 und auf seiner in Fig. 1 linken Seite einen Nehmerdruckraum 72 begrenzt. Im Nehmerdruckraum 72 ist eine Druckfeder 74 angeordnet, die den Geberkolben 68 in seine in Fig. 1 gezeigte Ruhestellung vorspannt. In der Ruhestellung des Geberkolbens 68 besteht u.a. zur Minimierung eines Verlustwegs des Geberkolbens 68 über einen mit einer Drossel 76 versehenen Verbindungsabschnitt 78 eine hydraulische Verbindung zwischen dem Geberkanal 64 bzw. dem Geberdruckraum 70 und dem Nehmerdruckraum 72, die der Geberkolben 68 unterbricht, sobald er durch Druckbeaufschlagung des Geberdruckraums 70 aus seiner Ruhestellung wegbewegt wird, bzw. wieder freigibt, wenn er in seine Ruhestellung zurückkehrt. Die Gebereinheit 22 hat des weiteren im Bereich des Nehmerdruckraums 72 einen Nehmeranschluß 80 für eine Druckleitung 82, über die der an sich bekannte und deshalb hier nicht näher beschriebene, mit der Reibkupplung (nicht dargestellt) wirkverbundene Stellzylinder 24 von der Gebereinheit 22 hydraulisch beaufschlagt werden kann. Der Stellzylinder 24 ist schließlich mit einem Wegsensor 84 zur Erfassung des Aus- bzw. Einrückhubs an der Reibkupplung ausgerüstet, der über eine elektrische Signalleitung 86 an die Steuerelektronik 48 angeschlossen ist.

Auch bei dem in Fig. 1 von links gesehen zweiten Steuerorgan 16, das über einen Verbindungskanal 88 im Funktionsblock 30 mit einem Wählzylinder 90 des Mehrstellungszylindersystems 26 hydraulisch verbunden ist, handelt es sich um ein Proportionalventil in 3/2-Wege-Ausführung, so daß das Steuerorgan 16 - ebenso wie das Steuerorgan 14 - keine drucklose Mittelstellung aufweist, die zu Problemen führen könnte, wenn es im hydraulischen Funktionsabschnitt infolge von Undichtigkeiten zu Druckabfällen käme. Das Steuerorgan 16 ist wiederum mittels einer Feder in die in Fig. 1 dargestellte Grundstellung vorgespannt, in der es den Verbindungskanal 88 mit dem Tankkanal 62 verbindet, und kann elektromagnetisch betätigt werden, um zur Versorgung des Wählzylinders 90 mit Hydraulikflüssigkeit den Druckkanal 54 mit dem Verbindungskanal 88 zu verbinden. Zu diesem Zweck ist das Steuerorgan 16 über eine elektrische Steuerleitung 92 an die Steuerelektronik 48 angeschlossen.

Der ebenfalls im Funktionsblock 30 integrierte, der Wahl der jeweiligen Schaltgasse im mechanischen Schaltgetriebe (nicht gezeigt) dienende Wählzylinder 90 hat einen Wählkolben 94, der auf seiner in Fig. 1 rechten Seite einen mit dem Verbindungskanal 88 kommunizierenden Druckraum 96 begrenzt. Auf der in Fig. 1 linken Seite des Wählkolbens 94 ist eine Druckfeder 98 vorgesehen, die den Wählkolben 94 in seine in Fig. 1 gezeigte Ruhestellung vorspannt. Es ist ersichtlich, daß der Wählkolben 94 durch elektrische Ansteuerung des Steuerorgans 16 mittels der Steuerelektronik 48 und der damit einhergehenden Druckbeaufschlagung des Druckraums 96 von dem Druckkanal 54 über den Verbindungskanal 88 aus seiner Ruhestellung gegen die Kraft der Druckfeder 98 in Fig. 1 nach links verschoben werden kann. Wenn die elektrische Ansteuerung des Steuerorgans 16 beendet und infolgedessen der Verbindungskanal 88 mit dem Tankkanal 62 verbunden wird, kommt es zu einer Entlastung des Druckraums 96, und der Wählkolben 94 wird durch die Kraft der Druckfeder 98 wieder in Fig. 1 nach rechts in seine Ruhestellung verschoben. Zur Erfassung des Hubs des Wählkolbens 94 ist schließlich am Wählzylinder 90 ein Wegsensor 100 vorgesehen, der über eine elektrische Signalleitung 102 an die Steuerelektronik 48 angeschlossen ist.

Bei den beiden in Fig. 1 rechten Steuerorganen 18, 20 handelt es sich um von der Steuerelektronik 48 über jeweils zugeordnete elektrische Steuerleitungen 104, 106 elektromagnetisch ansteuerbare Druckminderventile, die jeweils über einen Verbindungskanal 108, 110 an einen ebenfalls im Funktionsblock 30 integrierten Schaltzylinder 112 des Mehrstellungszylindersystems 26 angeschlossen sind. Der der Gangwahl in der jeweiligen Schaltgasse des mechanischen Schaltgetriebes (nicht dargestellt) dienende Schaltzylinder 112 hat einen Schaltkolben 114, der mit seinen beiden Stirnseiten jeweils einen Druckraum 116, 118 begrenzt, von denen der in Fig. 1 linke Druckraum 116 mit dem Verbindungskanal 108 kommuniziert, während der in Fig. 1 rechte Druckraum 118 mit dem Verbindungskanal 110 verbunden ist. Auch der Schaltzylinder 112 hat zur Erfassung des Hubs des Schaltkolbens 114 einen Wegsensor 120, der über eine elektrische Signalleitung 122 an die Steuerelektronik 48 angeschlossen ist. Für den Fachmann ist ersichtlich, daß durch geeignete Ansteuerung der Steuerorgane 18, 20 über die Steuerelektronik 48 in Abhängigkeit von u.a. dem mittels des Wegsensors 120 erfaßten Hub des Schaltkolbens 114 im Schaltzylinder 112 am Schaltkolben 114 ein definierter Differenzdruck (= Differenz der hydraulischen Drücke in den Druckräumen 116, 118) erzeugt werden kann, über den nicht nur die jeweilige Position des Schaltkolbens 114 im Schaltzylinder 112 einstellbar ist, sondern auch die Geschwindigkeit, mit der sich der Schaltkolben 114 im Schaltzylinder 112 in Fig. 1 nach links bzw. rechts bewegt.

In Fig. 1 ist schließlich noch zu erkennen, daß an die Steuerelektronik 48 auch externe Bauelemente bzw. -gruppen angeschlossen sind, die hier allgemein mit 124 beziffert sind. Hierbei handelt es sich im einzelnen um das Motormanagement 126, welches Signale von einem Sensor 128 für die Motordrehzahl sowie einem Sensor 130 für die Fahrpedalstellung erhält, die Zündung 132, einen Sensor 134 für die Schalthebelstellung, Sensoren 136 für die Raddrehzahlen, die Ganganzeige 138, Warnsignaleinrichtungen 140 sowie einen Sensor 142 für die Getriebedrehzahl. Da die externen Bauelemente bzw. -gruppen 124 und deren Zusammenwirken mit der Steuerelektronik 48 einerseits Fachleuten hinreichend bekannt sind und andererseits diesbezügliche Erläuterungen für das Verständnis der vorliegenden Erfindung nicht erforderlich erscheinen, sollen weitere Ausführungen hierzu an dieser Stelle unterbleiben.

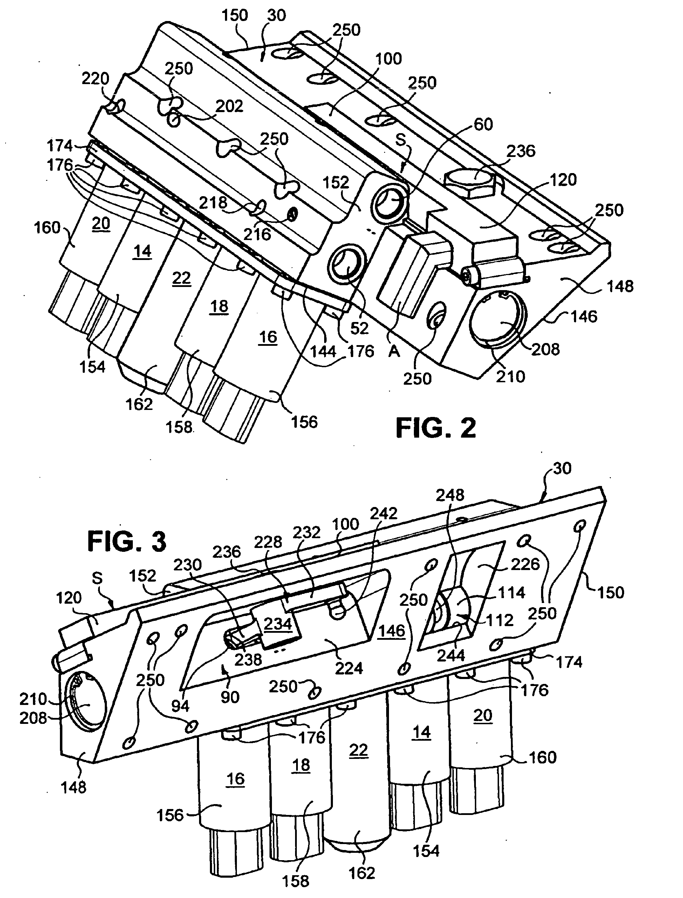

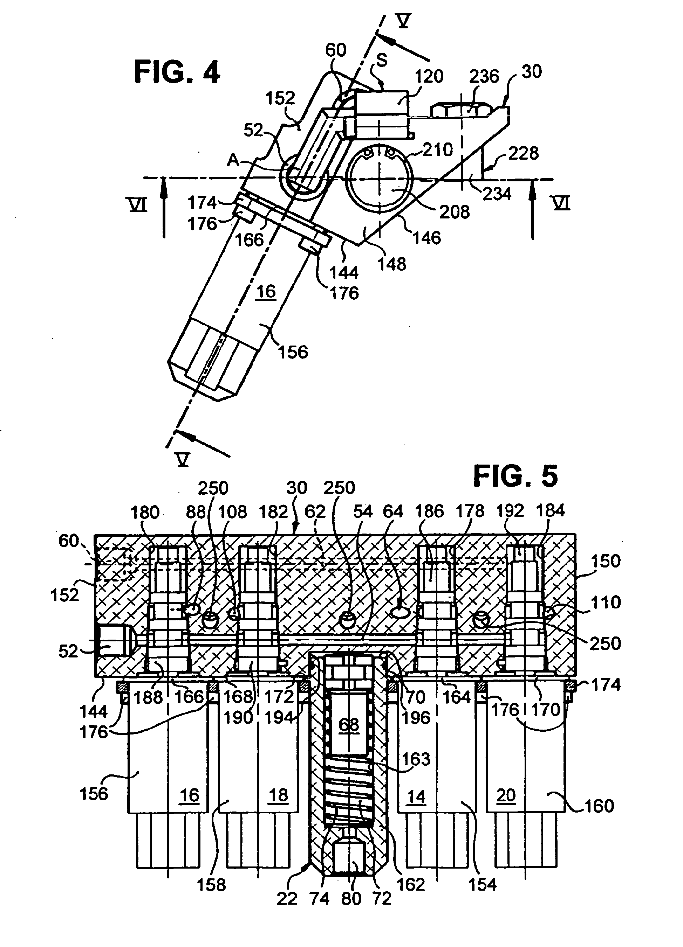

In den Fig. 2 bis 6 ist der Funktionsblock 30 mit den daran angebrachten Steuerorganen 14, 16, 18 und 20 und der ebenfalls daran angebrachten Gebereinheit 22 näher dargestellt, wobei die Fig. 4 den Funktionsblock 30 in der Lage zeigt, die der Funktionsblock 30 im am Gehäuse des Schaltgetriebes (nicht dargestellt) montierten Zustand einnimmt.

Gemäß insbesondere den Fig. 2 bis 4 hat der vorzugsweise aus einem Strangpreßprofil aus einem Leichtmetall wie einer Aluminiumlegierung ausgebildete Funktionsblock 30 eine in Längsrichtung des Funktionsblocks 30 verlaufende ebene Aufbaufläche 144 sowie eine ebene Flanschfläche 146, die ebenfalls in Längsrichtung des Funktionsblocks 30 verläuft und mit der Aufbaufläche 144 einen Winkel von ca. 115° einschließt. An seinen Längsenden endet der Funktionsblock 30 jeweils mit einer ebenen Stirnfläche 148, 150, die rechtwinklig zur Aufbaufläche 144 und zur Flanschfläche 146 verlaufen. Am in Fig. 2 vorderen Ende ist der Funktionsblock 30 des weiteren derart auf seiner in Fig. 2 linken Seite mit einer Ausnehmung versehen, daß dort eine zweite vordere, bezüglich der Stirnfläche 148 in Fig. 2 nach hinten versetzte ebene Stirnfläche 152 ausgebildet ist, die parallel zu den Stirnflächen 148, 150 verläuft.

Wie die Fig. 2 bis 5 zeigen, sind die Steuerorgane 14, 16, 18 und 20 sowie die Gebereinheit 22 jeweils in Patronenbauweise ausgeführt und an der Aufbaufläche 144 angeflanscht. Hierbei haben die Steuerorgane 14, 16, 18 und 20 sowie die Gebereinheit 22 jeweils ein im wesentlichen topfförmiges, vorzugsweise metallisches Gehäuse 154, 156, 158, 160 bzw. 162. Während in den Gehäusen 154, 156, 158 und 160 der Steuerorgane 14, 16, 18 bzw. 20 jeweils ein an sich bekannter Elektromagnetantrieb sowie eine Ventilfeder des jeweiligen Steuerorgans 14, 16, 18 bzw. 20 aufgenommen sind, ist - wie die Fig. 5 zeigt - in dem Gehäuse 162 der Gebereinheit 22 eine Zylinderbohrung 163 ausgebildet, welche der gleitenden Aufnahme des gegenüber der Zylinderbohrung 163 geeignet abgedichteten Geberkolbens 68 dient, und in die am vom Funktionsblock 30 abgewandten Ende des Gehäuses 162 der Nehmeranschluß 80 mündet. Des weiteren ist jedes der Gehäuse 154, 156, 158, 160 und 162 - wie ebenfalls in Fig. 5 zu erkennen ist - an seinem dem Funktionsblock 30 zugewandten Ende mit einem Ringflansch 164, 166, 168, 170 bzw. 172 versehen, der mit seiner dem Funktionsblock 30 zugewandten Stirnseite an der Aufbaufläche 144 anliegt. Die Ringflansche 164, 166, 168, 170 und 172 der Gehäuse 154, 156, 158, 160 bzw. 162 werden von einer Flanschplatte 174 hintergriffen, die fünf Öffnungen aufweist, durch die sich die Gehäuse 154, 156, 158, 160 bzw. 162 mit sehr geringfügigem Radialspiel jeweils hindurch erstrecken. Die Flanschplatte 174 selbst ist mit einer Mehrzahl von, im dargestellten Ausführungsbeispiel zwölf gleichmäßig am Rand der Flanschplatte 174 verteilten Schrauben 176 am Funktionsblock 30 festgeschraubt, um die Steuerorgane 14, 16, 18 und 20 sowie die Gebereinheit 22 am Funktionsblock 30 zu befestigen. Im Ergebnis sind die Steuerorgane 14, 16, 18 und 20 sowie die Gebereinheit 22 im an der Aufbaufläche 144 des Funktionsblocks 30 angeflanschten Zustand in einer Reihe hintereinander angeordnet, wobei die Gebereinheit 22 mittig zwischen den Steuerorganen 14, 16, 18 und 20 liegt, und das Steuerorgan 14 für die Gebereinheit 22 dieser benachbart angeordnet ist.

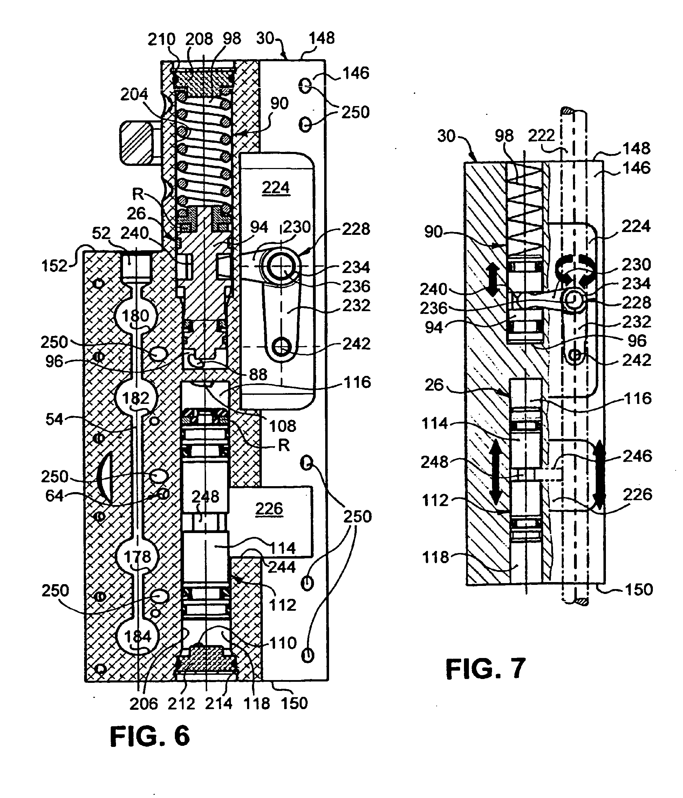

Gemäß den Fig. 5 und 6 ist jedem Steuerorgan 14, 16, 18 und 20 eine als gestufte Sackbohrung ausgeführte Anschlußbohrung 178, 180, 182 und 184 zur Aufnahme eines jeweils zugehörigen Ventilschiebers 186, 188, 190 bzw. 192 zugeordnet, an denen der Elektromagnetantrieb und die Ventilfeder des jeweiligen Steuerorgans 14, 16, 18 bzw. 20 angreifen und die in Fig. 6 zur Vereinfachung der Darstellung nicht gezeigt sind. Die Anschlußbohrungen 178, 180, 182 und 184 sind ausgehend von der Aufbaufläche 144 und senkrecht zu dieser in den Funktionsblock 30 eingebracht. Mittig zwischen den Anschlußbohrungen 178, 180, 182 und 184 ist eine zylindrische, von der Aufbaufläche 144 ausgehende Aussparung 194 in dem Funktionsblock 30 vorgesehen, die - wie in Fig. 5 zu erkennen ist - der abgedichteten Aufnahme eines an den Ringflansch 172 anschließenden zylindrischen Fortsatzes 196 des Gehäuses 162 der Gebereinheit 22 dient.

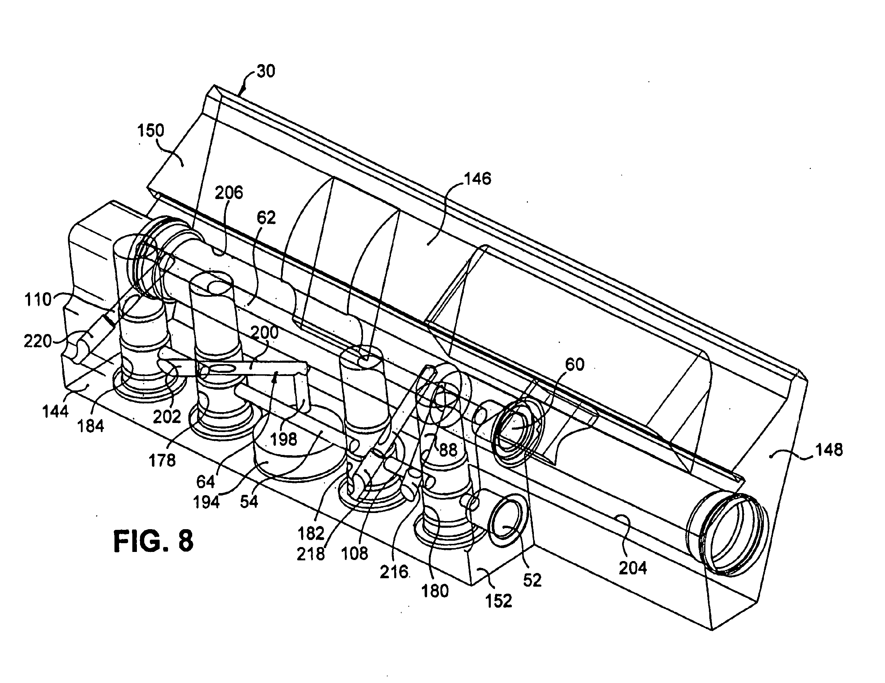

Wie den Fig. 2, 4, 5, 6 und 8 zu entnehmen ist, sind ausgehend von der Stirnfläche 152 und senkrecht zu dieser sowohl der Druckkanal 54 mit dem Druckanschluß 52 als auch der Tankkanal 62 mit dem Tankanschluß 60 als am Eingang gestufte Sackbohrungen in den Funktionsblock 30 eingebracht, so daß diese Kanäle 54, 62 in Längserstreckungsrichtung des Funktionsblocks 30 parallel zueinander und zu der Aufbaufläche 144 sowie der Flanschfläche 146 des Funktionsblocks 30 verlaufen. Sowohl der Druckkanal 54 als auch der Tankkanal 62 stehen innerhalb des Funktionsblocks 30 mit jeder der parallel zueinander verlaufenden Anschlußbohrungen 178, 180, 182 und 184 für die Steuerorgane 14, 16, 18 bzw. 20 in Verbindung. Genauer gesagt verläuft gemäß den Fig. 5, 6 und 8 der Druckkanal 54 im wesentlichen mittig durch die Anschlußbohrungen 180, 182 und 178 hindurch bevor er ebenfalls im wesentlichen mittig in der Anschlußbohrung 184 mündet. Der Tankkanal 62 hingegen, der in Fig. 5 lediglich gestrichelt angedeutet ist, weil er in Wirklichkeit oberhalb der Schnittebene von Fig. 5 liegt, schneidet gemäß Fig. 8 die Anschlußbohrungen 180, 182, 178 und 184 an ihren in Fig. 8 hinteren Rändern und endet an der Anschlußbohrung 184. Weil der Druckkanal 54 und der Tankkanal 62 rechtwinklig bezüglich der Anschlußbohrungen 180, 182, 178 und 184 im Funktionsblock 30 verlaufen, sind die jeweiligen Verbindungsstrecken längenmäßig minimiert. Wie insbesondere den Fig. 4 und 5 zu entnehmen ist, liegt ferner in der Einbaulage des Funktionsblocks 30 der Tankkanal 62 oberhalb des Druckkanals 54, und die Anschlußbohrungen 180, 182, 178 und 184 verlaufen steigend vom Druckkanal 54 zum Tankkanal 62 hin, was im Betrieb eine Selbstentlüftung des Funktionsblocks 30 ermöglicht.

In Fig. 8 ist zu erkennen, wie das Steuerorgan 14 hydraulisch mit der Gebereinheit 22 verbunden ist: Zur Ausbildung des Geberkanals 64 ist ausgehend vom Boden der Aussparung 194 eine Sackbohrung 198 in den Funktionsblock 30 eingebracht, während eine quer zur Sackbohrung 198 verlaufende, die Anschlußbohrung 178 für das Steuerorgan 14 am Rand schneidende weitere Sackbohrung 200 ausgehend von einer Seitenfläche des Funktionsblocks 30 derart in diesen eingebracht ist, daß die Sackbohrungen 198, 200 endseitig ineinander münden. Bei 202 ist in den Fig. 2 und 8 angedeutet, daß die Sackbohrung 200 an ihrem sich in die Seitenfläche des Funktionsblocks 30 öffnenden Ende mit einem geeigneten Verschluß versehen ist.

Auch das Mehrstellungszylindersystem 26 ist im Funktionsblock 30 integriert. Hierfür sind - wie insbesondere die Fig. 6 und 8 zeigen - ausgehend von jeweils einer Stirnfläche 148, 150 des Funktionsblocks 30 und senkrecht zur jeweiligen Stirnfläche 148, 150 Zylinderbohrungen 204, 206 als auf einer gemeinsamen Achse liegende, in Längsrichtung des Funktionsblocks 30 verlaufende Sackbohrungen in den Funktionsblock 30 eingebracht. In der Zylinderbohrung 204 ist der gegenüber der Zylinderbohrung 204 auf geeignete Weise abgedichtete Wählkolben 94 des Wählzylinders 90 längsverschiebbar aufgenommen. Der Wählkolben 94 begrenzt auf seiner in Fig. 6 unteren Seite in der Zylinderbohrung 204 den Druckraum 96 des Wählzylinders 90. An der in Fig. 6 oberen Seite des Wählkolbens 94 liegt die in der Zylinderbohrung 204 aufgenommene Druckfeder 98 des Wählzylinders 90 an, die sich an ihrem vom Wählkolben 94 abgewandten Ende an einem Stopfen 208 abstützt, der die Zylinderbohrung 204 nach außen verschließt und in der Zylinderbohrung 204 mittels eines Sprengrings 210 gesichert ist.

In der Zylinderbohrung 206 hingegen ist der Schaltkolben 114 des Schaltzylinders 112 längsverschiebbar aufgenommen, der gegenüber der Zylinderbohrung 206 ebenfalls geeignet abgedichtet ist. Der Schaltkolben 114 begrenzt auf seiner in Fig. 6 oberen Seite den Druckraum 116 des Schaltzylinders 112 in der Zylinderbohrung 206, während er auf seiner in Fig. 6 unteren Seite den Druckraum 118 des Schaltzylinders 112 begrenzt. Nach außen ist auch die Zylinderbohrung 206 mittels eines Stopfens 212 verschlossen, der in die Zylinderbohrung 206 eingesetzt und in dieser unter Zuhilfenahme eines Sprengrings 214 gesichert ist.

Die hydraulische Verschaltung des Mehrstellungszylindersystems 26 mit den Steuerorganen 16, 18 und 20 ist wiederum insbesondere der Fig. 8 zu entnehmen. Demgemäß ist ausgehend von der in Fig. 8 vorderen Seitenfläche des Funktionsblocks 30 eine den Verbindungskanal 88 ausbildende Querbohrung in den Funktionsblock 30 eingebracht, die zunächst die Anschlußbohrung 180 für das Steuerorgan 16 am Rand schneidet - wie auch in Fig. 6 zu erkennen ist - bevor sie im Druckraum 96 des Wählzylinders 90 mündet - wie auch die Fig. 6 zeigt. Das sich in die Seitenfläche des Funktionsblocks 30 öffnende Ende des Verbindungskanals 88 ist gemäß den Fig. 2 und 8 mittels eines geeigneten Verschlusses 216 verschlossen. Auch der Verbindungskanal 108 ist durch eine Querbohrung ausgebildet, die ausgehend von der in Fig. 8 vorderen Seitenfläche des Funktionsblocks 30 in diesen eingebracht ist, wobei sie gemäß Fig. 8 zunächst die Anschlußbohrung 182 für das Steuerorgan 18 am Rand schneidet bevor sie im Druckraum 116 des Schaltzylinders 112 mündet, was auch in Fig. 6 zu erkennen ist. Der Verbindungskanal 110 schließlich ist durch eine ausgehend von der in Fig. 8 vorderen Seitenfläche in den Funktionsblock 30 eingebrachte Querbohrung ausgebildet, die, nachdem sie die Anschlußbohrung 184 für das Steuerorgan 20 am Rand geschnitten hat, im Druckraum 118 des Schaltzylinders 112 mündet (siehe wiederum Fig. 6). Sowohl der Verbindungskanal 108 als auch der Verbindungskanal 110 zum Mehrstellungszylindersystem 26 sind gemäß den Fig. 2 und 8 an ihren sich in der Seitenfläche des Funktionsblocks 30 öffnenden Enden mit jeweils einem hydraulisch dichten Verschluß 218, 220 versehen.

Den Fig. 3, 6 und 7 sind weitere Einzelheiten dazu zu entnehmen, wie das im Funktionsblock 30 angeordnete Mehrstellungszylindersystem 26 mit dem Schaltgetriebe, von dem in Fig. 7 lediglich eine Schaltwelle 222 strichpunktiert angedeutet ist, in Wirkverbindung steht. Demgemäß ist der Funktionsblock 30 ausgehend von seiner Flanschfläche 146, mittels der er am Getriebegehäuse (nicht gezeigt) anflanschbar ist, mit Ausnehmungen 224, 226 zur Aufnahme von mechanischen Verbindungsgliedern versehen, über die das Mehrstellungszylindersystem 26 mit der Schaltwelle 222 des Schaltgetriebes wirkverbindbar ist. Von den mechanischen Verbindungsgliedern ist in den Fig. 3, 6 und 7 lediglich ein dem Wählzylinder 90 zugeordneter Winkelhebel 228 gezeigt, der in der Ausnehmung 224 des Funktionsblocks 30 aufgenommen ist. Der Winkelhebel 228 hat zwei Schenkel 230, 232, die mittels einer Lagerhülse 234 miteinander verbunden sind. Die Lagerhülse 234 ist an einem Lagerbolzen 236 gelagert, der gemäß den Fig. 2 und 4 am Funktionsblock 30 befestigt ist, so daß der Winkelhebel 228 um den Lagerbolzen 236 verschwenkt werden kann. Gemäß Fig. 3 durchgreift der Schenkel 230 des Winkelhebels 228 einen Durchbruch 238 zwischen der Ausnehmung 224 und der Zylinderbohrung 204 im Funktionsblock 30, um - wie in den Fig. 6 und 7 zu erkennen ist - in eine Radialnut 240 am Wählkolben 94 einzugreifen. Am Ende des anderen Schenkels 232 des Winkelhebels 228 ist ein Kugelzapfen 242 angebracht, der auf hier nicht gezeigte Weise an der Schaltwelle 222 angreift. Es ist ersichtlich, daß der Winkelhebel 228 bei einer Verschiebung des Wählkolbens 94 des Wählzylinders 90 in der Zylinderbohrung 204 infolge des Eingriffs des Schenkels 230 in der Radialnut 240 am Wählkolben 94 um den Lagerbolzen 236 verschwenkt wird, so daß der andere Schenkel 232 des Winkelhebels 228, genauer der daran angebrachte Kugelzapfen 242 eine Bewegung quer zur Schaltwelle 222 ausführt, bei der der Kugelzapfen 242 aufgrund seines Angriffs an der Schaltwelle 222 diese um ihre Achse dreht. Dies ist im oberen Teil von Fig. 7 durch die Pfeile am Wählkolben 94 bzw. an der Schaltwelle 222 angedeutet. Mit dieser Drehbewegung der Schaltwelle 222 wird in an sich bekannter Weise die gewünschte Schaltgasse gewählt.

Gemäß den Fig. 3 und 6 ist auch zwischen der Ausnehmung 226 und der Zylinderbohrung 206 des Schaltzylinders 112 ein Durchbruch 244 im Funktionsblock 30 vorgesehen. Durch den Durchbruch 244 erstreckt sich ein nur in Fig. 7 mit gestrichelten Linien angedeuteter Mitnehmer 246, der mit seinem in Fig. 7 linken Ende in eine Radialnut 248 eingreift, die am Schaltkolben 114 ausgebildet ist, während der Mitnehmer 246 mit seinem in Fig. 7 rechten Ende auf hier nicht gezeigte Weise an der Schaltwelle 222 angreift. Es ist ersichtlich, daß bei einer Verschiebung des Schaltkolbens 114 des Schaltzylinders 112 in der Zylinderbohrung 206 im Funktionsblock 30 die Schaltwelle 222 über den Mitnehmer 246 in Längsrichtung der Schaltwelle 222 mit verschoben wird. Dies ist im unteren Teil der Fig. 7 durch die Pfeile am Schaltkolben 114 bzw. an der Schaltwelle 222 angedeutet. Durch die bewirkte Längsbewegung der Schaltwelle 222 erfolgt in an sich bekannter Weise die Gangwahl in der jeweiligen Schaltgasse.

Zu dem in den Fig. 2 bis 6 dargestellten Funktionsblock 30 ist noch anzumerken, daß er auch mit einer Mehrzahl von, im dargestellten Ausführungsbeispiel zehn gestuften Befestigungsbohrungen 250 versehen ist, die sich durch den Funktionsblock 30 bis zu dessen Flanschfläche 146 hindurch erstrecken, ohne allerdings die Hydraulikbohrungen zu schneiden. Die Befestigungsbohrungen 250 dienen der Aufnahme von Schrauben (nicht gezeigt), über die der Funktionsblock 30 mit seiner Flanschfläche 146 gegen das Getriebegehäuse (nicht dargestellt) festgezogen werden kann. Schließlich ist in den Fig. 2 bis 4 noch zu erkennen, daß die dem Wählzylinder 90 und dem Schaltzylinder 112 zugeordneten Wegsensoren 100 bzw. 120 zu einem Doppelsensor S zusammengefaßt sind, der mit einem Ausgangssignalanschluß A versehen außen am Funktionsblock 30 befestigt ist und mittels dessen die axiale Position von jeweils am Wählkolben 94 bzw. Schaltkolben 114 angebrachten Ringmagneten R (siehe Fig. 6) im Funktionsblock 30 erfaßt werden kann.

Im Betrieb des Funktionsblocks 30, bei dem die Leistungseinheit 12 den Funktionsblock 30 mit Hydraulikflüssigkeit in vorbestimmter Menge und mit vorbestimmtem Druck versorgt, wird von der Steuerelektronik 48 zunächst das Steuerorgan 14 angesteuert, welches sodann den Druckkanal 54 mit dem Geberkanal 64 verbindet, wodurch der Geberdruckraum 70 in der Gebereinheit 22 druckbeaufschlagt wird und es in der Folge zu einer Verschiebung des Geberkolbens 68 kommt. Der Geberkolben 68 verschiebt nun Hydraulikflüssigkeit aus dem Nehmerdruckraum 72 über den Nehmeranschluß 80 und die Druckleitung 82 in den Stellzylinder 24, durch den sodann die Reibkupplung ausgerückt wird.

In der Folge oder mit einer gewissen Zeitüberschreitung zum Vorangegangenem kann der eigentliche Schaltvorgang erfolgen. Hierbei steuert die Steuerelektronik 48 zunächst das Steuerorgan 16 an, welches in der Folge den Druckkanal 54 mit dem Verbindungskanal 88 verbindet, so daß der Druckraum 96 des Wählzylinders 90 in gewünschtem Maße druckbeaufschlagt wird. Dadurch wird der Wählkolben 94 in der Zylinderbohrung 204 verschoben, was zur Wahl der gewünschten Schaltgasse ein Verdrehen der Schaltwelle 222 über den Winkelhebel 228 auf die schon beschriebene Weise bewirkt. Sodann steuert die Steuerelektronik 48 die Steuerorgane 18 und 20 an, wobei über die Verbindungskanäle 108 und 110 die Druckräume 116 bzw. 118 des Schaltzylinders 112 vom Druckkanal 54 in gewünschtem Maße druckbeaufschlagt werden. Es entsteht somit eine Druckdifferenz am Schaltkolben 114, die dazu führt, daß der Schaltkolben 114 in der gewünschten Richtung sowie mit der gewünschten Kraft und Geschwindigkeit in der Zylinderbohrung 206 verschoben wird. Hierbei nimmt der Schaltkolben 114 auf die bereits beschriebene Weise die Schaltwelle 222 in deren Längsrichtung mit, und der jeweilige Gang wird nach erfolgter Synchronisation eingelegt.

Jetzt kann die Reibkupplung wieder eingerückt werden, wozu eine Ansteuerung des Steuerorgans 14 derart erfolgt, daß dieses die Gebereinheit 22, genauer deren Geberdruckraum 70 über den Geberkanal 64 zum Tankkanal 62 hin in gewünschtem Maße druckentlastet. Dabei wird der Stellzylinder 24 durch die Federkraft der einrückenden Reibkupplung zurückgestellt, wobei das aus dem Stellzylinder 24 verdrängte Volumen an Hydraulikflüssigkeit wieder über die Druckleitung 82 in den Nehmerdruckraum 72 der Gebereinheit 22 zurückgeschoben wird.

Obgleich bei dem oben beschriebenen Ausführungsbeispiel mittels des Funktionsblocks 30 zur Schaltgassenwahl eine Drehbewegung an der Schaltwelle 222 erzeugt wird, während zur Gangwahl eine Längsbewegung an der Schaltwelle 222 erzeugt wird, ist für den Fachmann ersichtlich, daß diese Bewegungen je nach Bauart des Schaltgetriebes selbstverständlich auch vertauscht sein können, d.h. die Schaltgasse mit einer Längsbewegung der Schaltwelle gewählt wird bevor in der jeweiligen Schaltgasse der gewünschte Gang mit einer Drehbewegung der Schaltwelle eingelegt wird.

### Bezugszeichenliste

- 10: Betätigungsvorrichtung
- 12: Leistungseinheit
- 14: Steuerorgan
- 16: Steuerorgan
- 18: Steuerorgan
- 20: Steuerorgan
- 22: Gebereinheit
- 24: Stellzylinder
- 26: Mehrstellungszylindersystem
- 28: Vorratsbehälter
- 30: Funktionsblock
- 32: Ansaugleitung
- 34: Hydraulikpumpe
- 36: Druckleitung
- 38: Rückschlagventil
- 40: Druckspeicher
- 42: Druckbegrenzungsventil
- 44: Druckwächter
- 46: Signalleitung
- 48: Steuerelektronik
- 50: Steuerleitung
- 52: Druckanschluß
- 54: Druckkanal
- 56: Filter
- 58: Tankleitung
- 60: Tankanschluß
- 62: Tankkanal
- 64: Geberkanal
- 66: Steuerleitung
- 68: Geberkolben
- 70: Geberdruckraum
- 72: Nehmerdruckraum
- 74: Druckfeder
- 76: Drossel
- 78: Verbindungsabschnitt
- 80: Nehmeranschluß
- 82: Druckleitung
- 84: Wegsensor
- 86: Signalleitung
- 88: Verbindungskanal
- 90: Wählzylinder
- 92: Steuerleitung
- 94: Wählkolben
- 96: Druckraum
- 98: Druckfeder
- 100: Wegsensor
- 102: Signalleitung
- 104: Steuerleitung
- 106: Steuerleitung
- 108: Verbindungskanal
- 110: Verbindungskanal
- 112: Schaltzylinder
- 114: Schaltkolben
- 116: Druckraum
- 118: Druckraum
- 120: Wegsensor
- 122: Signalleitung
- 124: externe Bauelemente bzw. -gruppen
- 126: Motormanagement
- 128: Sensor für die Motordrehzahl
- 130: Sensor für die Fahrpedalstellung
- 132: Zündung
- 134: Sensor für die Schalthebelstellung
- 136: Sensoren für die Raddrehzahlen
- 138: Ganganzeige
- 140: Warnsignaleinrichtungen
- 142: Sensor für die Getriebedrehzahl
- 144: Aufbaufläche
- 146: Flanschfläche
- 148: Stirnfläche
- 150: Stirnfläche
- 152: Stirnfläche
- 154: Gehäuse
- 156: Gehäuse
- 158: Gehäuse
- 160: Gehäuse
- 162: Gehäuse
- 163: Zylinderbohrung
- 164: Ringflansch
- 166: Ringflansch
- 168: Ringflansch
- 170: Ringflansch
- 172: Ringflansch
- 174: Flanschplatte
- 176: Schraube
- 178: Anschlußbohrung
- 180: Anschlußbohrung
- 182: Anschlußbohrung
- 184: Anschlußbohrung
- 186: Ventilschieber
- 188: Ventilschieber
- 190: Ventilschieber
- 192: Ventilschieber
- 194: Aussparung
- 196: Fortsatz
- 198: Sackbohrung
- 200: Sackbohrung
- 202: Verschluß
- 204: Zylinderbohrung
- 206: Zylinderbohrung
- 208: Stopfen
- 210: Sprengring
- 212: Stopfen
- 214: Sprengring
- 216: Verschluß
- 218: Verschluß
- 220: Verschluß
- 222: Schaltwelle
- 224: Ausnehmung
- 226: Ausnehmung
- 228: Winkelhebel
- 230: Schenkel
- 232: Schenkel
- 234: Lagerhülse
- 236: Lagerbolzen
- 238: Durchbruch
- 240: Radialnut
- 242: Kugelzapfen
- 244: Durchbruch
- 246: Mitnehmer
- 248: Radialnut
- 250: Befestigungsbohrung

- A: Ausgangssignalanschluß
- M: Elektromotor
- R: Ringmagnet
- S: Doppelsensor

## Patentansprüche

1. Hydraulischer Funktionsblock (30) für eine Vorrichtung (10) zur Betätigung einer Reibkupplung und eines mechanischen Schaltgetriebes insbesondere in einem Kraftfahrzeug, wobei die Vorrichtung (10) umfaßt:
einen Druckversorgungsabschnitt mit einer Leistungseinheit (12) zur Erzeugung eines hydraulischen Drucks,
einen an den Druckversorgungsabschnitt über Steuerorgane (14, 16, 18, 20) angeschlossenen hydraulischen Funktionsabschnitt mit einer Gebereinheit (22) zur hydraulischen Ansteuerung eines mit der Reibkupplung wirkverbindbaren Stellzylinders (24), mittels dessen die Reibkupplung wahlweise aus- bzw. einrückbar ist, und einem mit dem Schaltgetriebe wirkverbindbaren Mehrstellungszylindersystem (26), welches zur Gang- bzw. Gassenwahl hydraulisch ansteuerbar ist, sowie
einen Druckentlastungsabschnitt mit einem Vorratsbehälter (28) für die Hydraulikflüssigkeit,
wobei zumindest die Steuerorgane (14, 16, 18, 20), die Gebereinheit (22) und das Mehrstellungszylindersystem (26) der Vorrichtung (10) an bzw. in dem Funktionsblock (30) integriert sind,
**dadurch gekennzeichnet, daß** der Funktionsblock (30) eine Aufbaufläche (144) hat, an der die Steuerorgane (14, 16, 18, 20) und die Gebereinheit (22) anflanschbar sind, und eine Flanschfläche (146) aufweist, mittels der er an einem Getriebegehäuse anflanschbar ist,
daß der Druckversorgungsabschnitt einen im Funktionsblock (30) ausgebildeten, gemeinsamen Druckkanal (54) für die Steuerorgane (14, 16, 18, 20) aufweist,
daß der Druckentlastungsabschnitt einen im Funktionsblock (30) ausgebildeten, gemeinsamen Tankkanal (62) für die Steuerorgane (14, 16, 18, 20) aufweist und
daß das Mehrstellungszylindersystem (26) einen Wählzylinder (90) zur Gassenwahl sowie einen Schaltzylinder (112) zur Gangwahl hat, die (90, 112) jeweils einen Kolben (94, 114) aufweisen, der in einer jeweils zugeordneten, in dem Funktionsblock (30) ausgebildeten Zylinderbohrung (204, 206) verschiebbar aufgenommen ist,
wobei die Aufbaufläche (144), die Flanschfläche (146), der Druckkanal (54), der Tankkanal (62) und die Zylinderbohrungen (204, 206) in Längsrichtung des Funktionsblocks (30) verlaufen.

2. Hydraulischer Funktionsblock (30) nach Anspruch 1, **dadurch gekennzeichnet, daß** die Steuerorgane (14, 16, 18, 20) und die Gebereinheit (22) in Patronenbauweise ausgeführt sind.

3. Hydraulischer Funktionsblock (30) nach Anspruch 1 oder 2, **dadurch gekennzeichnet, daß** die Steuerorgane (14, 16, 18, 20) und die Gebereinheit (22) im an der Aufbaufläche (144) des Funktionsblocks (30) angeflanschten Zustand in einer Reihe hintereinander angeordnet sind.

4. Hydraulischer Funktionsblock (30) nach Anspruch 3, **dadurch gekennzeichnet, daß** die Gebereinheit (22) mittig zwischen den Steuerorganen (14, 16, 18, 20) angeordnet ist und das Steuerorgan (14) für die Gebereinheit (22) der Gebereinheit (22) benachbart liegt.

5. Hydraulischer Funktionsblock (30) nach einem der vorhergehenden Ansprüche, **dadurch gekennzeichnet, daß** jedem Steuerorgan (14, 16, 18, 20) eine Anschlußbohrung (178, 180, 182, 184) zur Aufnahme eines jeweils zugehörigen Ventilschiebers (186, 188, 190, 192) zugeordnet ist, die ausgehend von der Aufbaufläche (144) in den Funktionsblock (30) eingebracht ist.

6. Hydraulischer Funktionsblock (30) nach Anspruch 5, **dadurch gekennzeichnet, daß** jede Anschlußbohrung (178, 180, 182, 184) mit dem Druckkanal (54) und dem Tankkanal (62) innerhalb des Funktionsblocks (30) in Verbindung steht, vorzugsweise sowohl den Druckkanal (54) als auch den Tankkanal (62) schneidet.

7. Hydraulischer Funktionsblock (30) nach Anspruch 6, **dadurch gekennzeichnet, daß** in der Einbaulage des Funktionsblocks (30) der Tankkanal (62) oberhalb des Druckkanals (54) liegt und die Anschlußbohrungen (178, 180, 182, 184) steigend verlaufen.

8. Hydraulischer Funktionsblock (30) nach einem der Ansprüche 5 bis 7, **dadurch gekennzeichnet, daß** die zur Aufnahme der Ventilschieber (186, 188, 190, 192) der Steuerorgane (14, 16, 18, 20) vorgesehenen Anschlußbohrungen (178, 180, 182, 184) parallel zueinander sowie rechtwinklig bezüglich des Druckkanals (54) und des Tankkanals (62) im Funktionsblock (30) verlaufen.

9. Hydraulischer Funktionsblock (30) nach einem der vorhergehenden Ansprüche, **dadurch gekennzeichnet, daß** die Zylinderbohrungen (204, 206) ausgehend von jeweils einer Stirnfläche (148, 150) des Funktionsblocks (30) in den Funktionsblock (30) eingebracht sind und vorzugsweise auf einer gemeinsamen Achse liegen.

10. Hydraulischer Funktionsblock (30) nach wenigstens den Ansprüchen 1 und 5, **dadurch gekennzeichnet, daß** die Zylinderbohrungen (204, 206) über Querbohrungen (88, 108, 110) mit den zur Aufnahme der Ventilschieber (188, 190, 192) der Steuerorgane (16, 18, 20) für das Mehrstellungszylindersystem (26) im Funktionsblock (30) vorgesehenen Anschlußbohrungen (180, 182, 184) verbunden sind.

11. Hydraulischer Funktionsblock (30) nach einem der vorhergehenden Ansprüche, **dadurch gekennzeichnet, daß** der Funktionsblock (30) ausgehend von der Flanschfläche (146) mit Ausnehmungen (224, 226) zur Aufnahme von mechanischen Verbindungsgliedern (228, 246) versehen ist, über die das Mehrstellungszylindersystem (26) mit einer Schaltwelle (222) des Schaltgetriebes wirkverbindbar ist.

12. Hydraulischer Funktionsblock (30) nach einem der vorhergehenden Ansprüche, **dadurch gekennzeichnet, daß** der Funktionsblock (30) aus einem Strangpreßprofil aus einem Leichtmetall wie einer Aluminiumlegierung ausgebildet ist.

## Claims

1. Hydraulic function block (30) for a device (10) for actuating a friction clutch and a mechanical gearbox particularly in a motor vehicle, wherein the device (10) comprises:
a pressure supply section with a power unit (12) for generating a hydraulic pressure,
a hydraulic function section which is connected to the pressure supply section via control members (14, 16, 18, 20) and has a transmitter unit (22) for hydraulically actuating a servo cylinder (24) which can be actively connected to the friction clutch and by means of which the friction clutch can be selectively engaged and disengaged, and a multi-position cylinder system (26) which can be actively connected to the gearbox and can be hydraulically actuated for gear and shift path selection, and
a pressure relief section with a reservoir (28) for the hydraulic fluid,
wherein at least the control members (14, 16, 18, 20), the transmitter unit (22) and the multi-position cylinder system (26) of the device (10) are integrated on or in the function block (30),
**characterised in that** the function block (30) has an installation face (144), to which the control members (14, 16, 18, 20) and the transmitter unit (22) can be flanged, and a flange face (146), by means of which it can be flanged to a gearbox housing,
**in that** the pressure supply section has a common pressure channel (54) for the control members (14, 16, 18, 20) which is formed in the function block (30),
**in that** the pressure relief section has a common fuelling channel (62) for the control members (14, 16, 18, 20) which is formed in the function block (30), and
**in that** the multi-position cylinder system (26) has a selection cylinder (90) for shift path selection and a shift cylinder (112) for gear selection, each of said cylinders (90, 112) having a respective piston (94, 114) which is displaceably accommodated in a respectively associated cylindrical bore (204, 206) formed in the function block (30),
wherein the installation face (144), the flange face (146), the pressure channel (54), the fuelling channel (62) and the cylindrical bores (204, 206) run in the longitudinal direction of the function block (30).

2. Hydraulic function block (30) according to claim 1, **characterised in that** the control members (14, 16, 18, 20) and the transmitter unit (22) are of cartridge design.

3. Hydraulic function block (30) according to claim 1 or 2, **characterised in that** the control members (14, 16, 18, 20) and the transmitter unit (22) are arranged in a row one behind the other when they are flanged to the installation face (144) of the function block (30).

4. Hydraulic function block (30) according to claim 3, **characterised in that** the transmitter unit (22) is arranged centrally between the control members (14, 16, 18, 20) and the control member (14) for the transmitter unit (22) is adjacent to the transmitter unit (22).

5. Hydraulic function block (30) according to one of the preceding claims, **characterised in that** each control member (14, 16, 18, 20) is assigned a connection bore (178, 180, 182, 184) for accommodating a respectively associated valve slide (186, 188, 190, 192) which is formed in the function block (30) starting from the installation face (144).

6. Hydraulic function block (30) according to claim 5,
**characterised in that** each connection bore (178, 180, 182, 184) is connected to the pressure channel (54) and the fuelling channel (62) within the function block (30) and preferably intersects both the pressure channel (54) and the fuelling channel (62).

7. Hydraulic function block (30) according to claim 6, **characterised in that**, in the installed position of the function block (30), the fuelling channel (62) is located above the pressure channel (54) and the connection bores (178, 180, 182, 184) are inclined upwards.

8. Hydraulic function block (30) according to one of claims 5 to 7, **characterised in that** the connection bores (178, 180, 182, 184) provided to accommodate the valve slides (186, 188, 190, 192) of the control members (14, 16, 18, 20) run parallel to one another and at right angles to the pressure channel (54) and the fuelling channel (62) in the function block (30).

9. Hydraulic function block (30) according to one of the preceding claims, **characterised in that** the cylindrical bores (204, 206) are formed in the function block (30) starting from a respective end face (148, 150) of the function block (30) and preferably lie on a common axis.

10. Hydraulic function block (30) according to at least one of claims 1 to 5, **characterised in that** the cylindrical bores (204, 206) are connected via transverse bores (88, 108, 110) to the connection bores (180, 182, 184) provided to accommodate the valve slides (188, 190, 192) of the control members (16, 18, 20) for the multi-position cylinder system (26) in the function block (30).

11. Hydraulic function block (30) according to one of the preceding claims, **characterised in that** the function block (30), starting from the flange face (146), is provided with recesses (224, 226) for accommodating mechanical connection elements (228, 246), via which the multi-position cylinder system (26) can be actively connected to a shift shaft (222) of the gearbox.

12. Hydraulic function block (30) according to one of the preceding claims, **characterised in that** the function block (30) is formed as an extruded profile made from a light metal, such as an aluminium alloy.

## Revendications

1. Bloc fonctionnel hydraulique (30) pour un dispositif (10) destiné à l'actionnement d'un embrayage à friction et d'une boîte de vitesses mécanique en particulier dans un véhicule automobile, le dispositif (10) comprenant :
- une portion d'alimentation en pression munie d'une unité de puissance (12) pour générer une pression hydraulique,
- une portion fonctionnelle hydraulique raccordée à la portion d'alimentation en pression via des organes de commande (14, 16, 18, 20) et munie d'une unité émettrice (22) pour le pilotage hydraulique d'un cylindre de positionnement (24) susceptible d'être relié en action à l'embrayage à friction, au moyen duquel l'embrayage à friction est susceptible d'être débrayé ou embrayé sélectivement, et munie d'un système de cylindre (26) à positions multiples susceptible d'être relié en action à la boîte de vitesses, qui est susceptible d'être piloté hydrauliquement pour la sélection du rapport de vitesse ou de la voie, ainsi que
- une portion de décharge de pression munie d'un réservoir (28) pour le liquide hydraulique,
au moins les organes de commande (14, 16, 18, 20), l'unité émettrice (22) et le système de cylindre à positions multiples (26) du dispositif (10) étant intégrés sur ou dans le bloc fonctionnel (30),
**caractérisé en ce que** le bloc fonctionnel (30) comprend une surface de montage (144) sur laquelle peuvent être bridés les organes de commande (14, 16, 18, 20) et l'unité émettrice (22), et présente une surface de bridage (146) au moyen de laquelle il peut être bridé sur un carter de boîte de vitesses,
**en ce que** la portion d'alimentation en pression présente un canal de pression (54) réalisé dans le bloc fonctionnel (30) et commun aux organes de commande (14, 16, 18, 20),
**en ce que** la portion de décharge de pression présente un canal de réservoir (62) réalisé dans le bloc fonctionnel (30) et commun aux organes de commande (14, 16, 18, 20), et
**en ce que** le système de cylindre à positions multiples (26) comprend un cylindre de sélection (90) pour la sélection des voies ainsi qu'un cylindre de passage (112) pour la sélection du rapport de vitesse, lesquels (90, 112) comprennent chacun un piston (94, 114) qui est logé avec faculté de translation dans un perçage cylindrique respectif (204, 206) associé ménagé dans le bloc fonctionnel (30),
la surface de montage (144), la surface de bridage (146), le canal de pression (54), le canal de réservoir (62) et les perçages cylindriques (204, 206) s'étendant en direction longitudinale du bloc fonctionnel (30).

2. Bloc fonctionnel hydraulique (30) selon la revendication 1, **caractérisé en ce que** les organes de commande (14, 16, 18, 20) et l'unité émettrice (22) sont réalisés en mode de construction à cartouche.

3. Bloc fonctionnel hydraulique (30) selon la revendication 1 ou 2, **caractérisé en ce que** les organes de commande (14, 16, 18, 20) et l'unité émettrice (22) sont agencés en une rangée les uns derrière les autres dans l'état bridé sur la surface de montage (144) du bloc fonctionnel (30).

4. Bloc fonctionnel hydraulique (30) selon la revendication 3, **caractérisé en ce que** l'unité émettrice (22) est agencée au milieu entre les organes de commande (14, 16, 18, 20), et **en ce que** l'organe de commande (14) pour l'unité émettrice (22) se trouve au voisinage de l'unité émettrice (22).

5. Bloc fonctionnel hydraulique ((30) selon l'une des revendications précédentes, **caractérisé en ce qu'**à chaque organe de commande (14, 16, 18, 20) est associé un perçage de raccordement (178, 180, 182, 184) pour loger un tiroir de valve associé respectif (186, 188, 190, 192), qui est ménagé dans le bloc fonctionnel (30) à partir de la surface de montage (144).

6. Bloc fonctionnel hydraulique (30) selon la revendication 5, **caractérisé en ce que** chaque perçage de raccordement (178, 180, 182, 184) est en communication avec le canal de pression (54) et avec le canal de réservoir (62) à l'intérieur du bloc fonctionnel (30), et recoupe de préférence aussi bien le canal de pression (54) que le canal de réservoir (62).

7. Bloc fonctionnel hydraulique (30) selon la revendication 6, **caractérisé en ce que** dans la position d'assemblage du bloc fonctionnel (30), le canal de réservoir (62) se trouve au-dessus du canal de pression (54) et les perçages de raccordement (178, 180, 182, 184) s'étendent en montant.

8. Bloc fonctionnel hydraulique (30) selon l'une des revendications 5 à 7, **caractérisé en ce que** les perçages de raccordement (178, 180, 182, 184) prévus pour loger les tiroirs de valve (186, 188, 190, 192) des organes de commande (14, 16, 18, 20) s'étendent parallèlement les uns aux autres ainsi qu'à angle droit par rapport au canal de pression (54) et au canal de réservoir (62) dans le bloc fonctionnel (30).

9. Bloc fonctionnel hydraulique (30) selon l'une des revendications précédentes, **caractérisé en ce que** les perçages cylindriques (204, 206) sont ménagés dans le bloc fonctionnel (30) à partir d'une surface frontale respective (148, 150) du bloc fonctionnel et se trouvent de préférence sur un axe commun.

10. Bloc fonctionnel hydraulique (30) selon l'une au moins des revendications 1 et 5, **caractérisé en ce que** les perçages cylindriques (204, 206) sont reliés via des perçages transversaux (88, 108, 110) aux perçages de raccordement (180, 182, 184) prévus dans le bloc fonctionnel (30) et destinés à loger les tiroirs de valve (188, 190, 192) des organes de commande (16, 18, 20) pour le système de cylindre à positions multiples (26).

11. Bloc fonctionnel hydraulique (30) selon l'une des revendications précédentes, **caractérisé en ce que** le bloc fonctionnel (30) est pourvu, à partir de la surface de bridage (146), d'évidements (224, 226) destinés à loger des organes de liaison mécaniques (228, 246) au moyen desquels le système de cylindre à positions multiples (26) est susceptible d'être relié en action à un arbre de changement de vitesse (222) de la boîte de vitesses.

12. Bloc fonctionnel hydraulique (30) selon l'une des revendications précédentes, **caractérisé en ce que** le bloc fonctionnel (30) est réalisé à partir d'un profilé extrudé en métal léger, tel qu'un alliage d'aluminium.
